# EUROPEAN PATENT APPLICATION

(11) **EP 2 475 217 A1**
(43) Date of publication of application: **11.07.2012**
(21) Application number: 11826189.0
(22) Date of filing: 14.03.2011
(51) Int. Cl.: H04W 88/06, H04W 48/18

(54) **DUAL-NETWORK TERMINAL AND STARTUP AND SHUTDOWN METHOD THEREOF**

(30) Priority: 12.11.2010 CN 201010541181
(71) Applicant: ZTE Corporation, Shenzhen, Guangdong 518057 (CN)
(72) Inventor: QI, Lin, Shenzhen City, Guangdon Province, 518057 (CN); TENG, Guolin, Shenzhen City, Guangdon Province, 518057 (CN); SU, Yuting, Shenzhen City, Guangdon Province, 518057 (CN); WEI, Yide, Shenzhen City, Guangdon Province, 518057 (CN)
(74) Representative: Novagraaf Technologies
(86) International application number: PCT/CN2011/071769
(87) International publication number: WO 2012/062073

(57) **Abstract**

The present invention discloses a method for startup of dual-network terminal. The method includes: the application subsystem receiving a push-button signal of startup, and initializing peripherals and an application program after powering up; the application subsystem controlling the 2G wireless communication subsystem to power up, the 2G wireless communication subsystem constructing a first virtual SIM proxy module in a protocol stack thereof, reading information in the SIM card in the subscriber identity module, and storing information in the SIM card into first virtual SIM proxy module; and the application subsystem controlling the 3G wireless communication subsystem to power up, the 3G wireless communication subsystem constructing a second virtual SIM proxy module in a protocol stack thereof, reading information of SIM card in the first virtual SIM proxy module into second virtual SIM proxy module. The present invention further discloses a method for shutdown of dual-network terminal and a dual-network terminal.

## Description

### Technical Field

The present invention relates to the field of mobile communication, and in particular, to a dual-network terminal and a method for startup thereof and a method for shutdown thereof.

### Background of the Related Art

Along with the progressive development of the establishment of 3rd generation mobile communication (3G) network in China, three major mobile communication operators all step into 3G era formally. However, in the early construction of the current 3G network and the following development period, the coverage level of the 3G network is quite different, compared with the 2nd generation mobile communication (2G) network which has already been optimized and improved constantly over ten years, in either the coverage breadth (the 2G network nearly covers all natural villages of our country) or the coverage depth (for instance indoor, basement and subway and so on), therefore each major operator also simultaneously regard the long term co-existence of the 2G and 3G dual-network as their own operation objective and strategy. China Mobile especially proposes the three "No principle", that is "no changing card, no changing number, no need to register ", and many time division-synchronization code division multiple access (TD-SCDMA)/global system for mobile communication (GSM) dual-mode single standby customized mobile phone terminals to popularize and operate its own TD-SCDMA 3G network.

However, these kinds of "2G and 3G network coexistence" strategy and "TD-SCDMA/GSM dual-mode single standby terminal customization" strategy meet with a difficult problem in the real operation. On one hand, since the current "2G and 3G dual-mode handoff " strategy causes unusual faults to occur occasionally, for example the mobile phone terminal reselects frequently, the power consumption is serious, the conversation is interrupted, the network surfing fails and even the network disconnecting and so on, and the user experience is worse; on the other hand, since the coverage quality of the current 3G network is still inferior to that of the GSM network, it causes that the user confidence in TD-SCDMA network is insufficient. The problem of the network has caused the predicament of the terminal, and the predicament of the terminal enlarges the problem of the network conversely.

### Summary of the Invention

The technical problem to be solved by the present invention is to provide a dual-network terminal and a method of startup thereof and a method of shutdown thereof, to realize the startup and shutdown of the dual-network terminal with only one SIM card.

In order to solve the above problem, the present invention provides a method for startup of a dual-network terminal, and the dual-network terminal is a dual-network and dual-standby terminal, comprising: an application subsystem, a 3G wireless communication subsystem, a 2G wireless communication subsystem and an subscriber identity module, wherein an SIM card is plugged in the subscriber identity module, and information used for 2G network and 3G network to perform the identity authentication is stored in the SIM card, and the 2G wireless communication subsystem is connected with the application subsystem, the subscriber identity module and the 3G wireless communication subsystem respectively, and the 3G wireless communication subsystem is connected with the application subsystem and the 2G wireless communication subsystem. The method comprises:
the application subsystem receiving a push-button signal of the startup, and initializing peripherals and an application program after powering up;
the application subsystem controlling the 2G wireless communication subsystem to power up, the 2G wireless communication subsystem constructing a first virtual SIM proxy module in a protocol stack of the 2G wireless communication subsystem, reading information in the SIM card in the subscriber identity module, and storing the information in the SIM card into the first virtual SIM proxy module; and
the application subsystem controlling the 3G wireless communication subsystem to power up, the 3G wireless communication subsystem constructing a second virtual SIM proxy module in a protocol stack of the 3G wireless communication subsystem, and reading the information of the SIM card in the first virtual SIM proxy module into the second virtual SIM proxy module.

After the step of the 2G wireless communication subsystem storing the information in the SIM card into the first virtual SIM proxy module, the method further comprises:
the 2G wireless communication subsystem starting to search the network, and residing in a circuit switching (CS) domain of the 2G network.

After the step of the 3G wireless communication subsystem reading the information of the SIM card in the first virtual SIM proxy module into the second SIM proxy module, the method further comprises:
the 3G wireless communication subsystem starting to search the network, and residing in a packet switching (PS) domain of the 3G network.

Wherein,
the 3G network is a time division-synchronization code division multiple access (TD-SCDMA) network, a wideband code division multiple access (WCDMA) network or a CDMA2000 network, and the 2G network is a global system for mobile communication (GSM) network or a code division multiple access (CDMA) network.

In order to solve the above problem, the present invention further provides a method for shutdown of a dual-network terminal, wherein the dual-network terminal is a dual-network and dual-standby terminal, comprising: an application subsystem, a 3G wireless communication subsystem, a 2G wireless communication subsystem and an subscriber identity module, wherein an SIM card is plugged in the subscriber identity module, and information used for 2G network and 3G network to perform the identity authentication is stored in the SIM card, and protocol stacks of the 3G wireless communication subsystem and the 2G wireless communication subsystem contain a virtual SIM proxy module respectively, and the 2G wireless communication subsystem is connected with the application subsystem, the subscriber identity module and the 3G wireless communication subsystem respectively, and the 3G wireless communication subsystem is connected with the application subsystem and the 2G wireless communication subsystem. The method comprises:
the application subsystem receiving a push-button signal of the shutdown, controlling the protocol stack of the 3G wireless communication subsystem to unregister a packet switching (PS) domain of the 3G network, and then controlling the 3G wireless communication subsystem to power down;
the application subsystem controlling the protocol stack of the 2G wireless communication subsystem to unregister a circuit switching (CS) domain of the 2G network, and then controlling the 2G wireless communication subsystem to power down; and
the application subsystem shutting down an application program and peripherals, and powering down.

After the step of the application subsystem controlling the protocol stack of the 3G wireless communication subsystem to unregister the PS domain of the 3G network, the method further comprises:
the 3G wireless communication subsystem updating the information in the SIM card by using the information in a second virtual SIM proxy module of the 3G wireless communication subsystem through the 2G wireless communication subsystem and the subscriber identity module.

After the step of the application subsystem controlling the protocol stack of the 2G wireless communication subsystem to unregister the CS domain of the 2G network, the method further comprises:
the 2G wireless communication subsystem updating the information in the SIM card by using the information in a first virtual SIM proxy module of the 2G wireless communication subsystem through the subscriber identity module.

Wherein,
the 3G network is a time division-synchronization code division multiple access (TD-SCDMA) network, a wideband code division multiple access (WCDMA) network or a CDMA2000 network, and the 2G network is a global system for mobile communication (GSM) network or a code division multiple access (CDMA) network.

In order to solve the above problem, the present invention further provides a dual-network terminal, and the dual-network terminal is a dual-network and dual-standby terminal, comprising: an application subsystem, a 3G wireless communication subsystem, a 2G wireless communication subsystem and an subscriber identity module, wherein an SIM card is plugged in the subscriber identity module, and information used for 2G network and 3G network to perform the identity authentication is stored in the SIM card, and the 2G wireless communication subsystem is connected with the application subsystem, the subscriber identity module and the 3G wireless communication subsystem respectively, and the 3G wireless communication subsystem is connected with the application subsystem and the 2G wireless communication subsystem, wherein,
the application subsystem is configured to receive a push-button signal of the startup, and initialize peripherals and an application program after powering up; and then control the 2G wireless communication subsystem to power up firstly, and then control the 3G wireless communication subsystem to power up;
the 2G wireless communication subsystem is configured to construct a first virtual SIM proxy module in a protocol stack of the 2G wireless communication subsystem after powering up, read information in the SIM card in the subscriber identity module, and store the information in the SIM card into the first virtual SIM proxy module; and
the 3G wireless communication subsystem is configured to construct a second virtual SIM proxy module in a protocol stack of the 3G wireless communication subsystem after powering up, and read the information of the SIM card in the first virtual SIM proxy module into the second virtual SIM proxy module.

Wherein,
the 2G wireless communication subsystem is further configured to: after storing the information in the SIM card into the first virtual SIM proxy module, start to search the network and reside in a circuit switching (CS) domain of the 2G network;
the 3G wireless communication subsystem is further configured to: after reading the information of the SIM card in the first virtual SIM proxy module into the second virtual SIM proxy module, start to search the network, and reside in a packet switching (PS) domain of the 3 G network.

Wherein,
the application subsystem is further configured to: after receiving a push-button signal of the shutdown, control the protocol stack of the 3G wireless communication subsystem to unregister the PS domain of the 3G network, and control the 3G wireless communication subsystem to power down; and then control the protocol stack of the 2G wireless communication subsystem to unregister the CS domain of the 2G network, and control the 2G wireless communication subsystem to power down; and then shut down the application program and the peripherals, and power down by self.

Wherein,
the 3G wireless communication subsystem is further configured to: after the application subsystem controls the protocol stack of the 3G wireless communication subsystem to unregister the PS domain of the 3G network, update the information in the SIM card by using the information in the second virtual SIM proxy module of the 3G wireless communication subsystem through the 2G wireless communication subsystem and the subscriber identity module;
the 2G wireless communication subsystem is further configured to: after the application subsystem controls the protocol stack of the 2G wireless communication subsystem to unregister the CS domain of the 2G network, update the information in the SIM card by using the information in the first virtual SIM proxy module of the 2G wireless communication subsystem through the subscriber identity module.

Wherein,
the 3G network is a time division-synchronization code division multiple access (TD-SCDMA) network, a wideband code division multiple access (WCDMA) network or a CDMA2000 network, and the 2G network is a global system for mobile communication (GSM) network or a code division multiple access (CDMA) network.

The startup and shutdown method provided by the present invention is applicable to various dual-network and dual-standby, single card and single number terminals. Compared with the current dual-mode and single standby terminal, since it uses two wireless modules to register the CS domain of the 2G network and the PS domain of the 3G network respectively, there is no need to perform the handoff of the dual-mode, and the speed of startup and searching the network is promoted greatly, and the user experience of the terminal is improved. And the present invention only uses the single SIM card to realize the dual-network and dual-standby function, and compared with other dual-network and dual-standby, dual-card and dual-number terminals, it is helpful to the design of the hardware and structure part and saves the cost.

### Brief Description of Drawings

FIG. 1 is a schematic diagram of a dual-network and dual-standby terminal according to an embodiment of the present invention;
FIG. 2 is a flow chart of startup of a dual-network and dual-standby terminal according to an embodiment of the present invention;
FIG. 3 is a flow chart of shutdown of a dual-network and dual-standby terminal according to an embodiment of the present invention;
FIG. 4 is a schematic diagram of a dual-network and dual-standby terminal according to an application example of the present invention;
FIG. 5 is a flow chart of startup of a dual-network and dual-standby terminal according to an application example of the present invention;
FIG. 6 is a flow chart of shutdown of a dual-network and dual-standby terminal according to an application example of the present invention.

### Preferred Embodiments of the Present Invention

Aiming at the characteristics that the bandwidth of the TD-SCDMA network is larger and suitable for the data service and the 2G network optimization work is accumulated more and supports the 2G service better, such as the voice and so on, the dual-network and dual-standby of 2G and 3G can be used to realize the service shunts of the CS (circuit switching) service and the PS (packet switching) service in the terminal side (that is, the 2G network bears the CS service, and the 3G network bears the PS service (data service)), to avoid the problem brought by the current 2G and 3G network coexisting.

The embodiments of the present invention are described in detail with reference to the accompanying drawings hereinafter. It should be illustrated that, in the case of not conflicting, the embodiments in the present application and features in these embodiments can be combined with each other at random.

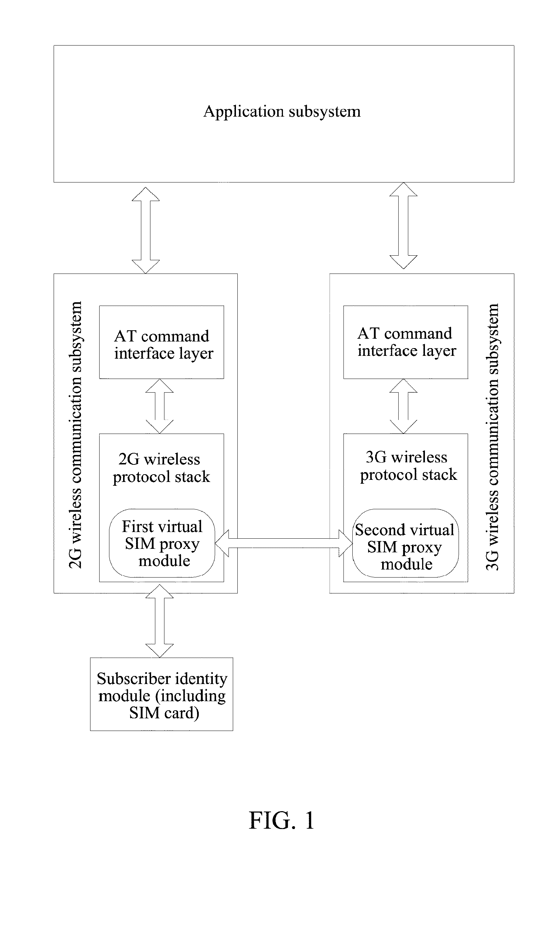

As shown in FIG. 1, the dual-network terminal of the embodiment of the present invention is a dual-network and dual-standby terminal, including: an application (AP) subsystem, a 3G wireless communication subsystem, a 2G wireless communication subsystem and an subscriber identity module (SIM), wherein an SIM card is plugged in the subscriber identity module, and information used for 2G network and 3G network to perform the identity authentication is stored in the SIM card, and the 2G wireless communication subsystem is connected with the application subsystem, the subscriber identity module and the 3G wireless communication subsystem respectively, and the 3G wireless communication subsystem is connected with the application subsystem and the 2G wireless communication subsystem.

The 3G wireless communication subsystem and the 2G wireless communication subsystem constitute the wireless communication (CP) subsystem.

In the present invention,
the protocol stacks of the 3G wireless communication subsystem and the 2G wireless communication subsystem contain a virtual SIM proxy (it also can be called a SIM virtual proxy area) module respectively. Wherein, the 2G wireless communication subsystem contains a first virtual SIM proxy module and the 3G wireless communication subsystem contains a second virtual SIM proxy module, to realize the co-management of the two wireless communication subsystems and use one SIM card, and in this way, it can make the use and management of the SIM card more flexible and high efficient.

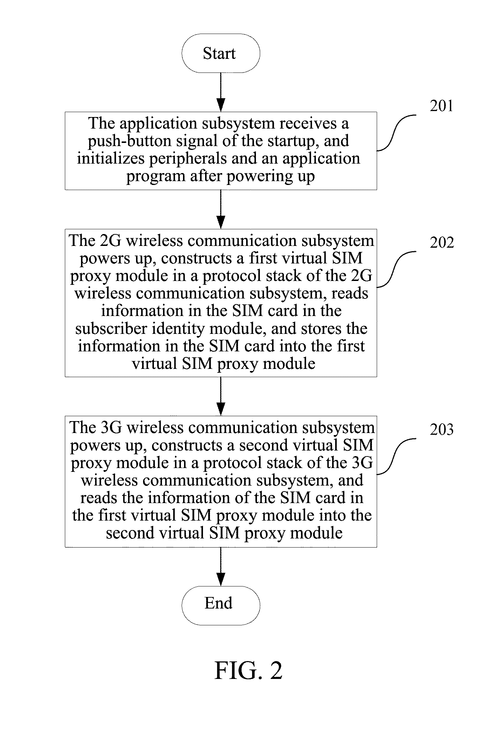

As shown in FIG. 2, the startup process of a dual-network and dual-standby terminal according to an embodiment of the present invention includes the following steps:
in step 201, the application subsystem receives a push-button signal of the startup, and initializes peripherals and an application program after powering up;
in step 202, the application subsystem controls the 2G wireless communication subsystem to power up, and the 2G wireless communication subsystem constructs a first virtual SIM proxy module in a protocol stack of the 2G wireless communication subsystem, reads information in the SIM card in the subscriber identity module, and stores the information in the SIM card into the first virtual SIM proxy module;
after the 2G wireless communication subsystem stores the information in the SIM card into the first virtual SIM proxy module, the 2G wireless communication subsystem starts to search the network and resides in a circuit switching (CS) domain of the 2G network, and then the 2G wireless communication subsystem can inform the application subsystem that the 2G wireless communication subsystem finishes the startup;
in step 203, the application subsystem controls the 3G wireless communication subsystem to power up, and the 3G wireless communication subsystem constructs a second virtual SIM proxy module in a protocol stack of the 3G wireless communication subsystem and reads the information of the SIM card in the first virtual SIM proxy module into the second virtual SIM proxy module;
after the 3G wireless communication subsystem reads the information of the SIM card in the first virtual SIM proxy module into the second virtual SIM proxy module, the 3G wireless communication subsystem starts to search the network and resides in a packet switching (PS) domain of the 3G network, and then the 3G wireless communication subsystem can inform the application subsystem that the 3G wireless communication subsystem finishes the startup, thus the startup process ends.

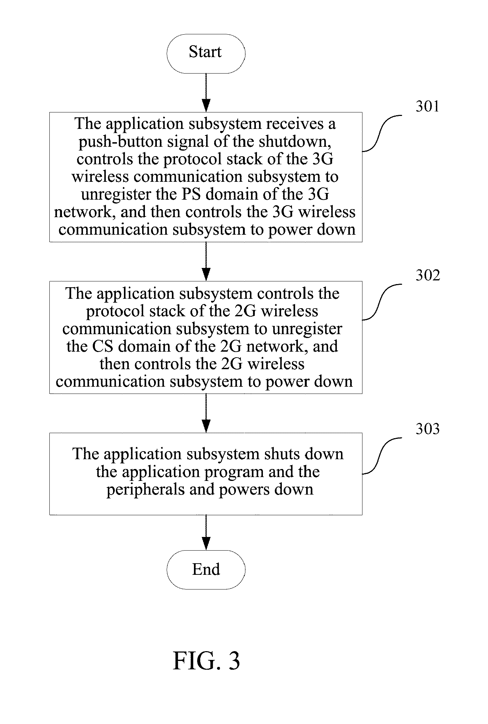

As shown in FIG. 3, the shutdown process of a dual-network and dual-standby terminal according to an embodiment of the present invention includes the following steps:
in step 301, the application subsystem receives a push-button signal of the shutdown, controls the protocol stack of the 3G wireless communication subsystem to unregister a packet switching (PS) domain of the 3G network, and then controls the 3G wireless communication subsystem to power down;
after the application subsystem controls the protocol stack of the 3G wireless communication subsystem to unregister the PS domain of the 3G network, if needed, the 3G wireless communication subsystem updates the information in the SIM card by using the information in the second virtual SIM proxy module of the 3G wireless communication subsystem through the 2G wireless communication subsystem and the subscriber identity module;
in step 302, the application subsystem controls the protocol stack of the 2G wireless communication subsystem to unregister the CS domain of the 2G network, and then controls the 2G wireless communication subsystem to power down;
after the application subsystem controls the protocol stack of the 2G wireless communication subsystem to unregister the CS domain of the 2G network, if needed, the 2G wireless communication subsystem updates the information in the SIM card by using the information in the first virtual SIM proxy module of the 2G wireless communication subsystem through the subscriber identity module;
in step 303, the application subsystem shuts down an application program and peripherals and powers down, and the shutdown process ends.

The dual-network and dual-standby terminal of the present invention can realize the service shunts of the PS service and the CS service (namely the 2G network bears the CS service and the 3G network bears the PS data service).

Specifically, when the user of the dual-network and dual-standby terminal initiates the service, the application subsystem selects the network according to the service type; when the initiated service is the PS service or a video telephone service in the CS service, the application subsystem selects the 3G network; when the initiated service is the CS service except the video telephone service, the application subsystem selects the 2G network; when the selected network meets the condition of the signal intensity, the wireless communication subsystem corresponding to the selected network performs the communication through the selected network.

Wherein, although the video telephone service is a service based on the CS circuit domain, it must perform the service bearer through the 3G network, and therefore a user needs to choose the 3G network when initiating the video telephone service.

The above-mentioned the condition of the signal intensity which has been met refers that the signal intensity of the network can bear the related service (that is the initiated service). During the specific implementation, it can be judged whether to meet the condition of the signal intensity when the signal intensity of the network is greater than the specified threshold.

In the present invention, it can adopt the following ways to adjust the initiated PS service, including:
1, when the initiated service is the PS service and the application subsystem selects the 3G network, if the application subsystem judges that the PS service can't be initiated according to the signal intensity of the current 3G network monitored by the 3G wireless communication subsystem, the 2G wireless communication subsystem is notified to activate the 2G data link of the 2G network and initiate the service;
2, when the initiated service is the PS service and in the process of the 3G wireless communication subsystem performing the communication through the 3G network, if the application subsystem judges that the signal intensity of the current 3G network is weakened to be unable to bear the PS service according to the signal intensity of the current 3G network monitored by the 3G wireless communication subsystem, the application subsystem notifies the 3G wireless communication subsystem and the 2G wireless communication subsystem to hand over the packet data protocol (PDP) data link corresponding to the PS service from the 3G data link to the 2G data link.
3, when the 2G wireless communication subsystem uses the 2G data link to perform the PS service, and when the application subsystem judges that the signal intensity of the current 3G network is strengthened to be able to bear the PS service according to the signal intensity of the current 3G network monitored by the 3G wireless communication subsystem, the application subsystem notifies the 3G wireless communication subsystem and the 2G wireless communication subsystem to hand over the PDP data link corresponding to the PS service from the 2G data link to the 3G data link.

During the specific implementation, the application subsystem can judge the signal intensity of the current 3G network; if no more than the specified threshold, it is judged to be unable to initiate the PS service or bear the PS service; if greater than the specified threshold, it is judged to bear the PS service. Certainly, the specified threshold used in the above-mentioned three situations can be equal, and also can be unequal.

In addition, aiming at the situation that the initiated service is a video telephone service but the application subsystem judges that the video telephone service can't be initiated according to the signal intensity of current 3G network monitored by the 3G wireless communication subsystem, the application subsystem controls the video telephone service to switch back to the ordinary voice service, and then notifies the 2G wireless communication subsystem to initiate the voice service.

The above-mentioned 3G network can be the TD-SCDMA network, the wideband code division multiple access (WCDMA) network, or the CDMA2000 network, and the 2G network can be the GSM network or the code division multiple access (CDMA) network, etc. In the embodiment and the application example of the present invention, it is mainly described by taking the 3G network as the TD-SCDMA network and taking the 2G network as the GSM network, but not limit to this, and other types of 3G network and 2G network are also applicable to the present invention.

The application example that the 3G network is the TD-SCDMA network and the 2G network is the GSM network is further described in detail hereinafter.

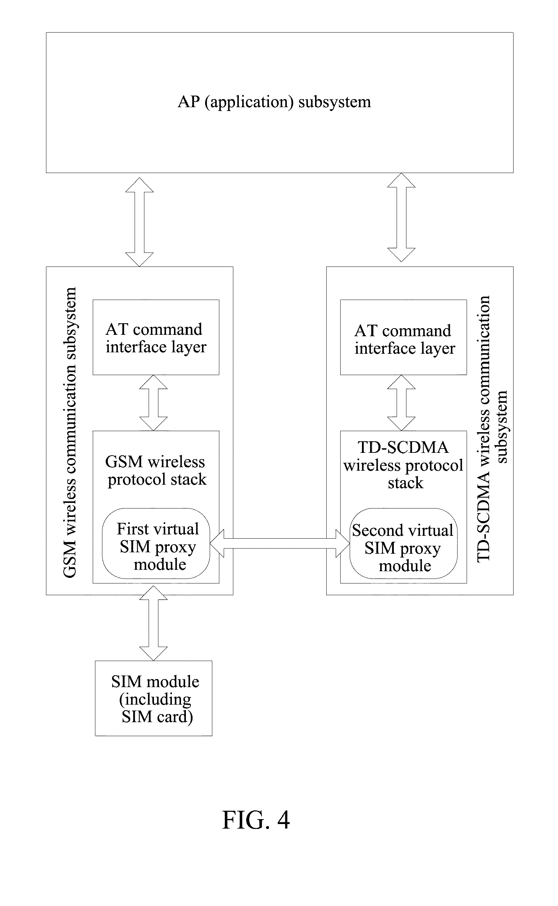

As shown in FIG. 4, the dual-network and dual-standby, single card and single number terminal in the present example adopts the three-core framework "AP (application) + TD-SCDMA Modem (wireless) + GSM Modem (wireless)", wherein the AP part is a primary module responsible for the application; the TD-SCDMA modem (the TD-SCDMA wireless communication subsystem) only resides in the PS domain of the 3G network and supports the high-speed data service; the GSM modem (the GSM wireless communication subsystem) only resides in the CS domain of the 2G network and supports the CS service. The SIM card slot is mounted on the GSM Modem, and since the two wireless modules need to use the same SIM card, one SIM Proxy is constructed respectively in the protocol stack layer of the two wireless modules, and part or all information in the SIM card has a duplicate on the SIM Proxy. For the operation of reading the SIM card, the Modem visits the local SIM Proxy directly; for the operation of writing the SIM card, the GSM Modem visits the SIM card through the local SIM Proxy, and TD-SCDMA Modem interacts with the SIM Proxy of the GSM Modem through the local SIM Proxy, and the SIM Proxy of the GSM Modem finishes the actual writing operation. Due to this characteristic, its startup and shutdown process is quite different, compared with the startup and shutdown process of the ordinary dual-network and dual-standby terminal.

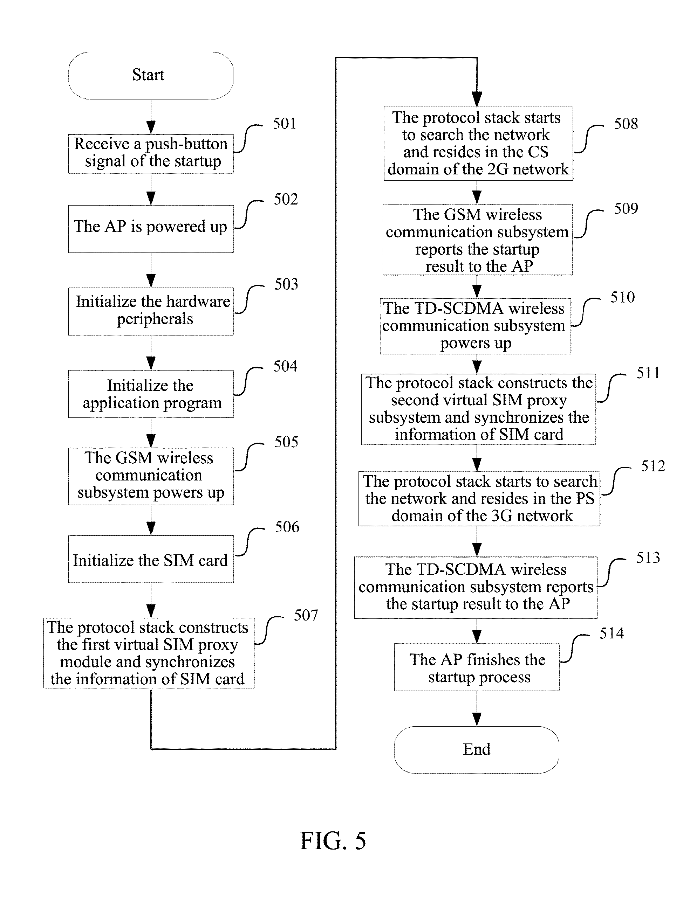

As shown in FIG. 5, the startup method based on the dual-network and dual-standby, single card and single number terminal of the present example includes the following steps:
in step 501, the terminal receives a push-button signal of the startup, and the terminal includes the three-core "AP (application) + TD-SCDMA Modem (wireless) + GSM Modem (wireless)"; wherein the AP is the application subsystem, the TD-SCDMA Modem is the TD-SCDMA wireless communication subsystem and the GSM Modem is the GSM wireless communication subsystem;
in step 502, the AP is powered up;
in step 503, the AP performs the initialization of the hardware peripherals;
in step 504, the AP performs the initialization of the application program;
in step 505, GSM Modem is powered up by AP;
in step 506, the GSM Modem initializes the SIM card;
in step 507, the GSM Modem protocol stack constructs the first SIM Proxy, and synchronizes the information of the SIM card to the first SIM Proxy;
in step 508, the GSM Modem protocol stack starts to search the network and makes the GSM Modem only reside in the CS domain of the 2G network;
in step 509, the GSM Modem reports the startup result to the AP;
in step 510, the TD-SCDMA Modem is powered up by AP;
in step 511, the TD-SCDMA Modem protocol stack constructs the second SIM Proxy, and synchronizes the information of the SIM card to the second SIM Proxy;
in step 512, the TD-SCDMA Modem protocol stack starts to search the network and makes TD-SCDMA Modem only reside in the PS domain of the 3G network;
in step 513, the TD-SCDMA Modem reports the startup result to the AP;
in step 514, the AP finishes the startup process.

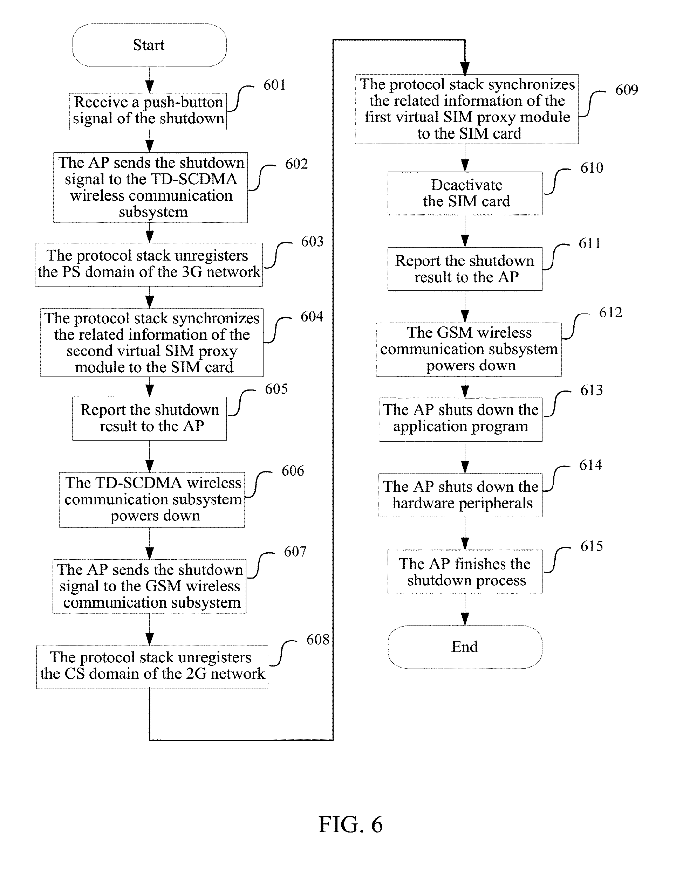

As shown in FIG. 6, the shutdown method of the present invention includes the following steps:
in step 601, the terminal receives a push-button signal of the shutdown, and the terminal includes the three-core "AP (application) + TD-SCDMA Modem (wireless) + GSM Modem (wireless)";
in step 602, the AP sends the shutdown signal to the TD-SCDMA Modem;
in step 603, the TD-SCDMA Modem protocol stack unregister the PS domain of the 3G network;
in step 604, the TD-SCDMA Modem protocol stack updates the related information of the second SIM Proxy to the SIM card;
in step 605, the TD-SCDMA Modem reports the shutdown result to the AP;
in step 606, the TD-SCDMA Modem powers down;
in step 607, the AP sends the shutdown signal to the GSM Modem;
in step 608, the GSM Modem protocol stack unregister the CS domain of the 2G network;
in step 609, the GSM Modem protocol stack updates the related information of the first SIM Proxy to the SIM card;
in step 610, the GSM Modem deactivates the SIM card;
in step 611, the GSM Modem reports the shutdown result to the AP;
in step 612, the GSM Modem powers down;
in step 613, the AP shuts down the application program;
in step 614, the AP shuts down the hardware peripherals.
in step 615, the AP finishes the shutdown process and powers down.

It can be understood by those skilled in the art that all or part of steps in the above-mentioned method can be fulfilled by programs instructing the relevant hardware components, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function module. The present invention is not limit to any specific form of the combination of the hardware and software.

The above description is only the preferred embodiments of the present invention and is not intended to limit the present invention. For those skilled in the art, the present invention can have various modifications and variations. All of modifications, equivalent replacements and/or variations and so on without departing from the spirit and essence of the present invention should be included in the protection scope of the present invention.

### Industrial Applicability

The startup and shutdown method provided by the present invention is applicable to various dual-network and dual-standby, single card and single number terminal. Compared with the current dual-mode and single standby terminal, since it uses two wireless modules to register the CS domain of the 2G network and the PS domain of the 3G network respectively, there is no need to perform the handoff of the dual-mode, and the speed of startup and searching the network is promoted greatly, and the user experience of the terminal is improved. And the present invention only uses the single SIM card to realize the dual-network and dual-standby function, compared with other dual-network and dual-standby, dual-card and dual-number terminal, it is helpful to the design of the hardware and structure part and saves the cost.

## Claims

1. A method for startup of a dual-network terminal, **characterized in that** the dual-network terminal is a dual-network and dual-standby terminal, and the dual-network and dual-standby terminal comprises: an application subsystem, a 3G wireless communication subsystem, a 2G wireless communication subsystem and an subscriber identity module, wherein an SIM card is plugged in the subscriber identity module, and information used for 2G network and 3G network to perform identity authentication is stored in the SIM card, and the 2G wireless communication subsystem is connected with the application subsystem, the subscriber identity module and the 3G wireless communication subsystem respectively, and the 3G wireless communication subsystem is connected with the application subsystem and the 2G wireless communication subsystem, and the method comprises:
the application subsystem receiving a push-button signal of startup, and initializing peripherals and an application program after powering up;
the application subsystem controlling the 2G wireless communication subsystem to power up, the 2G wireless communication subsystem constructing a first virtual SIM proxy module in a protocol stack of the 2G wireless communication subsystem, reading information in the SIM card in the subscriber identity module, and storing the information in the SIM card into the first virtual SIM proxy module; and
the application subsystem controlling the 3G wireless communication subsystem to power up, the 3G wireless communication subsystem constructing a second virtual SIM proxy module in a protocol stack of the 3G wireless communication subsystem, and reading the information of the SIM card in the first virtual SIM proxy module into the second virtual SIM proxy module.

2. The method according to claim 1, after the step of the 2G wireless communication subsystem storing the information in the SIM card into the first virtual SIM proxy module, further comprising:
the 2G wireless communication subsystem starting to search a network, and residing in a circuit switching (CS) domain of the 2G network.

3. The method according to claim 1 or 2, after the step of the 3G wireless communication subsystem reading the information of the SIM card in the first virtual SIM proxy module into the second virtual SIM proxy module, further comprising:
the 3G wireless communication subsystem starting to search a network, and residing in a packet switching (PS) domain of the 3G network.

4. The method according to claim 1, wherein,
the 3G network is a time division-synchronization code division multiple access (TD-SCDMA) network, a wideband code division multiple access (WCDMA) network or a CDMA2000 network, and the 2G network is a global system for mobile communication (GSM) network or a code division multiple access (CDMA) network.

5. A method for shutdown of a dual-network terminal, **characterized in that** the dual-network terminal is a dual-network and dual-standby terminal, and the dual-network and dual-standby terminal comprises: an application subsystem, a 3G wireless communication subsystem, a 2G wireless communication subsystem and an subscriber identity module, wherein an SIM card is plugged in the subscriber identity module, and information used for 2G network and 3G network to perform identity authentication is stored in the SIM card, and protocol stacks of the 3G wireless communication subsystem and 2G wireless communication subsystem contain a virtual SIM proxy module respectively, and the 2G wireless communication subsystem is connected with the application subsystem, the subscriber identity module and the 3G wireless communication subsystem respectively, and the 3G wireless communication subsystem is connected with the application subsystem and the 2G wireless communication subsystem, and the method comprises:
the application subsystem receiving a push-button signal of shutdown, controlling the protocol stack of the 3G wireless communication subsystem to unregister a packet switching (PS) domain of the 3G network, and then controlling the 3G wireless communication subsystem to power down;
the application subsystem controlling the protocol stack of the 2G wireless communication subsystem to unregister a circuit switching (CS) domain of the 2G network, and then controlling the 2G wireless communication subsystem to power down; and
the application subsystem shutting down an application program and peripherals, and powering down.

6. The method according to claim 5, after the step of the application subsystem controlling the protocol stack of the 3G wireless communication subsystem to unregister the PS domain of the 3G network, further comprising:
the 3G wireless communication subsystem updating the information in the SIM card by using information in a second virtual SIM proxy module of the 3G wireless communication subsystem through the 2G wireless communication subsystem and the subscriber identity module.

7. The method according to claim 5 or 6, after the step of the application subsystem controlling the protocol stack of the 2G wireless communication subsystem to unregister the CS domain of the 2G network, further comprising:
the 2G wireless communication subsystem updating the information in the SIM card by using information in a first virtual SIM proxy module of the 2G wireless communication subsystem through the subscriber identity module.

8. The method according to claim 5, wherein,
the 3G network is a time division-synchronization code division multiple access (TD-SCDMA) network, a wideband code division multiple access (WCDMA) network or a CDMA2000 network, and the 2G network is a global system for mobile communication (GSM) network or a code division multiple access (CDMA) network.

9. A dual-network terminal, **characterized in that** the dual-network terminal is a dual-network and dual-standby terminal, and the dual-network and dual-standby terminal comprises: an application subsystem, a 3G wireless communication subsystem, a 2G wireless communication subsystem and an subscriber identity module, wherein an SIM card is plugged in the subscriber identity module, and information used for 2G network and 3G network to perform identity authentication is stored in the SIM card, and the 2G wireless communication subsystem is connected with the application subsystem, the subscriber identity module and the 3G wireless communication subsystem respectively, and the 3G wireless communication subsystem is connected with the application subsystem and the 2G wireless communication subsystem, wherein
the application subsystem is configured to receive a push-button signal of startup, and initialize peripherals and an application program after powering up; and then control the 2G wireless communication subsystem to power up firstly, and control the 3G wireless communication subsystem to power up;
the 2G wireless communication subsystem is configured to construct a first virtual SIM proxy module in a protocol stack of the 2G wireless communication subsystem after powering up, read information in the SIM card in the subscriber identity module, and store the information in the SIM card into the first virtual SIM proxy module; and
the 3G wireless communication subsystem is configured to construct a second virtual SIM proxy module in a protocol stack of the 3G wireless communication subsystem after powering up, and read the information of the SIM card in the first virtual SIM proxy module into the second virtual SIM proxy module.

10. The terminal according to claim 9, wherein,
the 2G wireless communication subsystem is further configured to: after storing the information in the SIM card into the first virtual SIM proxy module, start to search a network and reside in a circuit switching (CS) domain of the 2G network;
the 3G wireless communication subsystem is further configured to: after reading the information of the SIM card in the first virtual SIM proxy module into the second virtual SIM proxy module, start to search a network, and reside in a packet switching (PS) domain of the 3G network.

11. The terminal according to claim 9 or 10, wherein,
the application subsystem is further configured to: after receiving a push-button signal of shutdown, control the protocol stack of the 3G wireless communication subsystem to unregister the PS domain of the 3G network, and control the 3G wireless communication subsystem to power down; and then control the protocol stack of the 2G wireless communication subsystem to unregister the CS domain of the 2G network, and control the 2G wireless communication subsystem to power down; and then shut down the application program and the peripherals, and power down by self.

12. The terminal according to claim 11, wherein,
the 3G wireless communication subsystem is further configured to: after the application subsystem controls the protocol stack of the 3G wireless communication subsystem to unregister the PS domain of the 3G network, update the information in the SIM card by using information in the second virtual SIM proxy module of the 3G wireless communication subsystem through the 2G wireless communication subsystem and the subscriber identity module;
the 2G wireless communication subsystem is further configured to: after the application subsystem controls the protocol stack of the 2G wireless communication subsystem to unregister the CS domain of the 2G network, update the information in the SIM card by using information in the first virtual SIM proxy module of the 2G wireless communication subsystem through the subscriber identity module.

13. The terminal according to claim 9, wherein,
the 3G network is a time division-synchronization code division multiple access (TD-SCDMA) network, a wideband code division multiple access (WCDMA) network or a CDMA2000 network, and the 2G network is a global system for mobile communication (GSM) network or a code division multiple access (CDMA) network.
